# EUROPEAN PATENT APPLICATION

(11) **EP 3 476 770 A1**
(43) Date of publication of application: **01.05.2019**
(21) Application number: 18200857.3
(22) Date of filing: 17.10.2018
(51) Int. Cl.: B65F 1/14, B65F 3/00, G05D 1/02

(54) **WASTE COLLECTION SYSTEM WITH AUTONOMOUS MOBILITY OF WASTE CONTAINERS**

(30) Priority: 20.10.2017 IT 201700119168
(71) Applicant: ITALDESIGN-GIUGIARO S.p.A, 10121 Torino (IT)
(72) Inventor: BUSSETTI, Nicolas, I-10028 TROFARELLO (Torino) (IT); BERGERO, Marco, I-10144 TORINO (IT)
(74) Representative: Deambrogi, Edgardo

(57) **Abstract**

A waste collection system is described, comprising a plurality of waste collection containers (C), adapted to be operatively arranged at respective predetermined collection sites (P), and at least one remote waste delivery or disposal site (D), characterized in that it further comprises:
a fleet of autonomous drive transport vehicles (V), each of which is adapted to carry at least one waste collection container (C), which are arranged for circulation on a network road (R) of a predetermined area (T) according to at least one respective calculated path; and
- an electronic management system (S) for moving the fleet of transport vehicles (V) on the road network (R) for the delivery of at least one predetermined waste collection container (C) in a discharged condition to a predetermined collection site (P) or for the delivery of at least one predetermined waste collection container (C) in a charged condition to a delivery site (D),

wherein said electronic management system (S) is arranged for defining a delivery path of a transport vehicle (V) on the road network (R) towards a predetermined collection (P) or delivery (D) site and providing navigation instructions to said transport vehicle (V) for the defined path.

## Description

The present invention relates to waste collection systems, such as municipal solid waste road collection systems and in particular to separate collection systems based on a plurality of containers for the temporary storage of waste of different types. More specifically, the present invention relates to a waste collection system according to the preamble of claim 1.

Municipal solid waste collection systems provide for the distribution in the territory of a multiplicity of waste collection containers, possibly distinguishable by shape and/or colour according to the waste material they are intended to receive to allow the implementation of a separate collection, preparatory to sustainable waste management, in which each type of sorted waste is directed towards the most suitable waste disposal or recovery treatment.

The collection containers are widespread throughout the territory, permanently located in public places (along the road network) in the case of road collection systems, or at home in the case of door-to-door collection systems. In any case, the emptying of the containers takes place on site through special vehicles that collect the waste locally from the respective containers and transport it to a site for delivery or remote disposal.

Disadvantageously, this system imposes the circulation of bulky vehicles for the discharging of the collection containers on the road network, and the planning of the discharge service of the collection containers with a predetermined periodicity, typically calculated on a statistical basis and independent of the real filling condition of the containers. It thus happens that some containers are emptied even before their full filling, whereby the circulation of the vehicle for loading the waste from the collection containers would not have been strictly necessary, or on the contrary some containers are not promptly discharged, often leading to the accumulation of waste outside thereof for a prolonged period of time, with risks to public hygiene.

The same loading vehicles are noisy and foul-smelling. Furthermore, their circulation requires the company in charge of carrying out the service to own and maintain the means intended for it and to allocate a large number of human operators to the service, at least for driving the vehicles, even if the taking and unloading of containers is automated.

At the same time, it is necessary to provide for the collection and replacement of the collection containers whenever their sanitization or replacement is necessary, which occurs with further deployment of vehicles and operators.

In the worst cases, all this can cause problems of environmental pollution in addition to the inability to meet the needs of users of a municipal waste collection service.

The present invention therefore aims to provide a satisfactory solution to the problems described above, while avoiding the drawbacks of prior art.

According to the present invention, this object is achieved by a waste collection system having the features referred to in claim 1.

Particular embodiments are the subject of the dependent claims, whose content is to be understood as an integral part of the present description.

In summary, the present invention is based on the principle of implementing a system for collecting municipal solid waste by means of autonomous mobility collection containers or containers that are moved in an autonomous manner by means of transport vehicles. Unlike the prior art in which the collection containers are permanently located in public places and periodically emptied by unloading means and operators, the transport vehicles aim at managing in a fully autonomous way the collection and unloading steps, respectively receiving indications about the filling condition of the containers and moving independently in a road network or in delimited areas, for example along predefined tracks or following remotely or real time pre-loaded navigation instructions, in order to reach a specific delivery site or means intended for delivery and waiting within an identified region, or a dedicated collection site.

The waste collection system object of the invention advantageously comprises a fleet of vehicles for transporting the waste-collecting containers, used for the transport of at least one container and preferably a plurality of containers adapted to allow a wide-spread collection of different types of waste. The container transport vehicles are advantageously electric vehicles adapted to move autonomously along a plurality of predefined or non-predefined paths communicating with an operating centre by means of direct telecommunication connections (for example, by means of currently used telecommunication systems and 5G connection) or indirect telecommunication connections (for example, using a Wi-Fi hot spot network associated with the urban network, street furniture or road infrastructure).

The system object of the invention comprises an electronic management platform for managing the assignment of waste collection containers and related transport vehicles to a respective collection site associated with a predetermined position in a reference coordinate system of a map of a road network, for example depending on the number and type of collection containers intended for said collection site. The electronic management platform is also configured to manage the movement of the fleet of transport vehicles in the municipal territory area for the delivery of the collection containers at the respective collection or delivery sites assigned, which movement includes the navigation of the vehicle towards a collection site, e.g. identified by a specific signal output by the said container if it is separate and autonomous with respect to the transport vehicle, or from a collection site to a delivery site. The movement of the fleet of transport vehicles includes the definition or calculation of a delivery path of a transport vehicle and the communication of navigation instructions to said transport vehicle for the defined or calculated route for suitability (as far as time and safety is concerned) in real time.

The system object of the invention can advantageously also make use of a reservation application for a dedicated waste collection service, on special occasions, for example for the collection of cumbersome or particular waste.

Specifically, the function of reservation of a dedicated waste collection service is advantageously provided through a software application that can be executed at a personal portable electronic device, such as a personal communication device (for example, a smartphone) which allows a user to request a transport vehicle equipped with at least one container for the collection of the type of waste to be disposed of, indicating a place and a delivery time, for example at home, at a user's current location or a delivery location selected from a plurality of predetermined sites.

In a first embodiment, the movement of the transport vehicle fleet occurs with the containers on board the vehicles and the transport vehicles stay at the collection sites for a predefined time or until it is necessary or it is requested that the collection containers be delivered to their respectively assigned collection or delivery sites. In a second embodiment, the transport vehicles are intended for transportation of the collection containers from the collection sites to the delivery sites in a filled condition and viceversa in an empty condition, the collection containers remaining autonomously at the collection sites intended for them.

Further features and advantages of the invention will appear more clearly from the following detailed description of an embodiment thereof, given by way of non-limiting example with reference to the accompanying drawing, in which:
figure 1 schematically shows a waste collection system object of the invention, in a territory area;

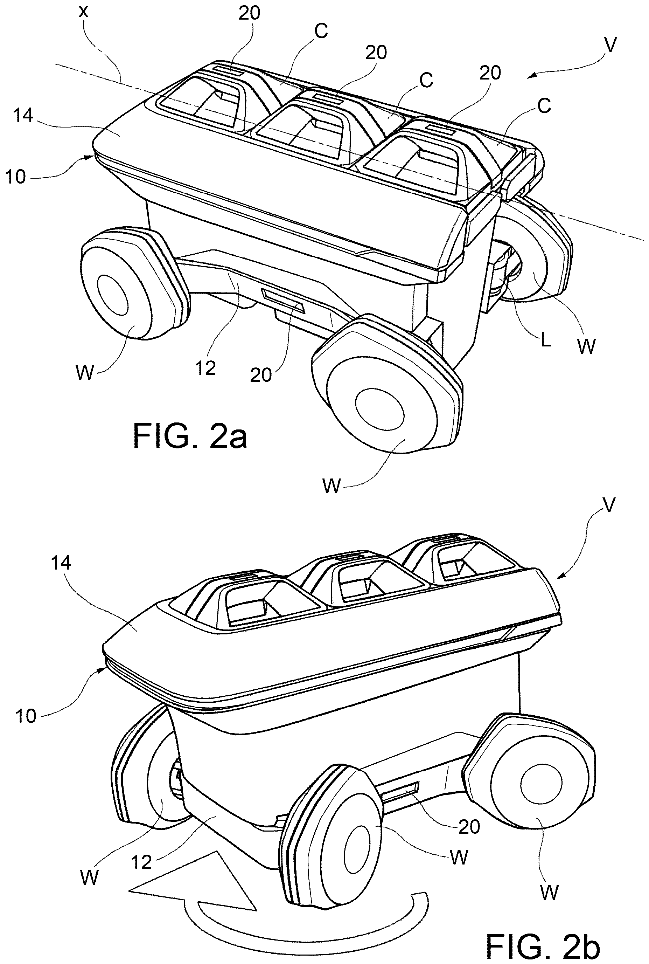

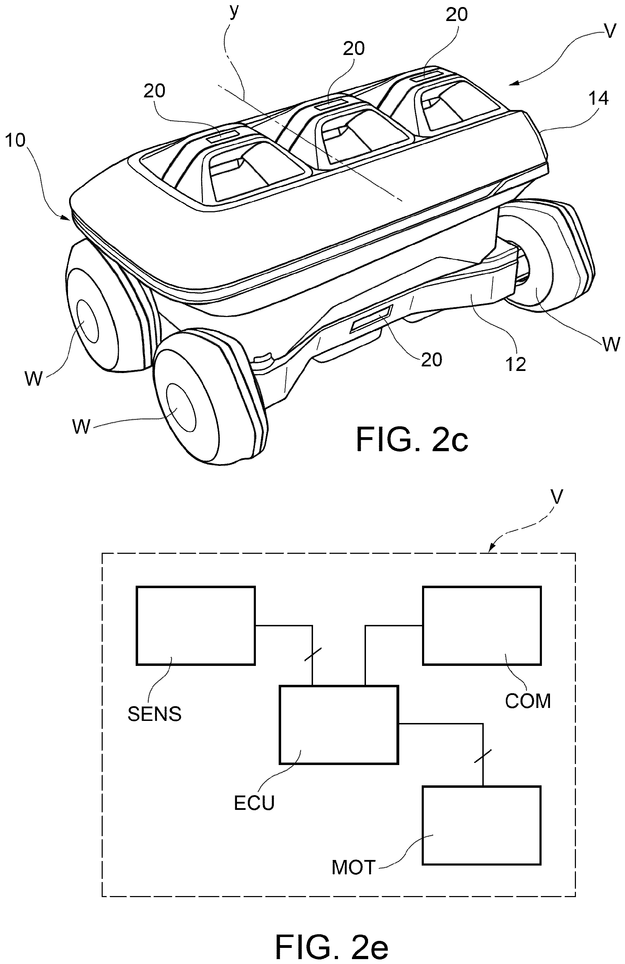

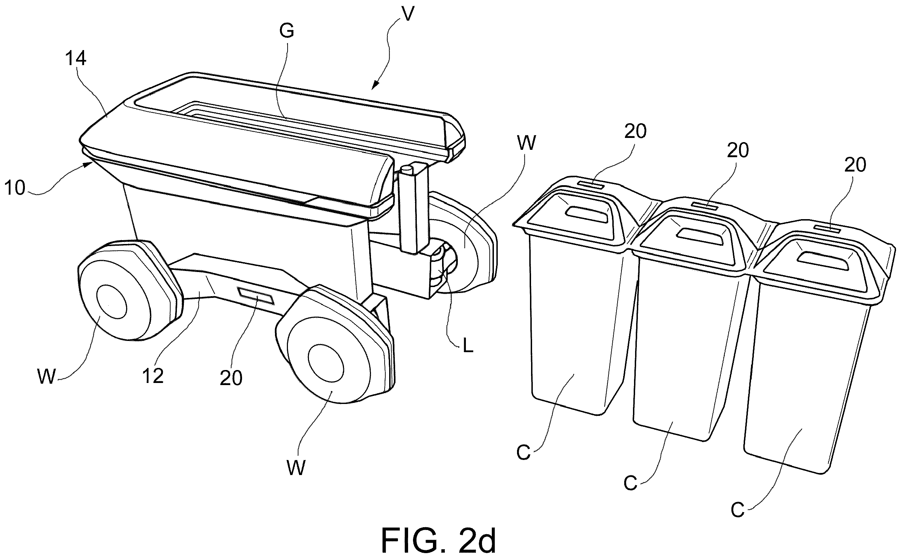

figures 2a, 2b, 2c and 2d show a possible embodiment of a vehicle for transporting containers for the collection of waste according to the system of the invention, respectively in a travel configuration, in which the wheels are aligned according to a longitudinal translation direction and the containers are in a raised position from the ground, in a parking movement configuration, in which the wheels turn about a vertical axis to align in a transverse direction and the containers are in a raised position from the ground, in a stop configuration of the vehicle at a collection site, in which the containers are in a position resting on the ground, and in a configuration for unloading the containers for emptying and/or replacing them;
figures 3a and 3b show a second possible embodiment of a vehicle for transporting containers for the collection of waste according to the system of the invention; and
figure 4 schematically shows the interaction between a user and the waste collection system object of the invention.

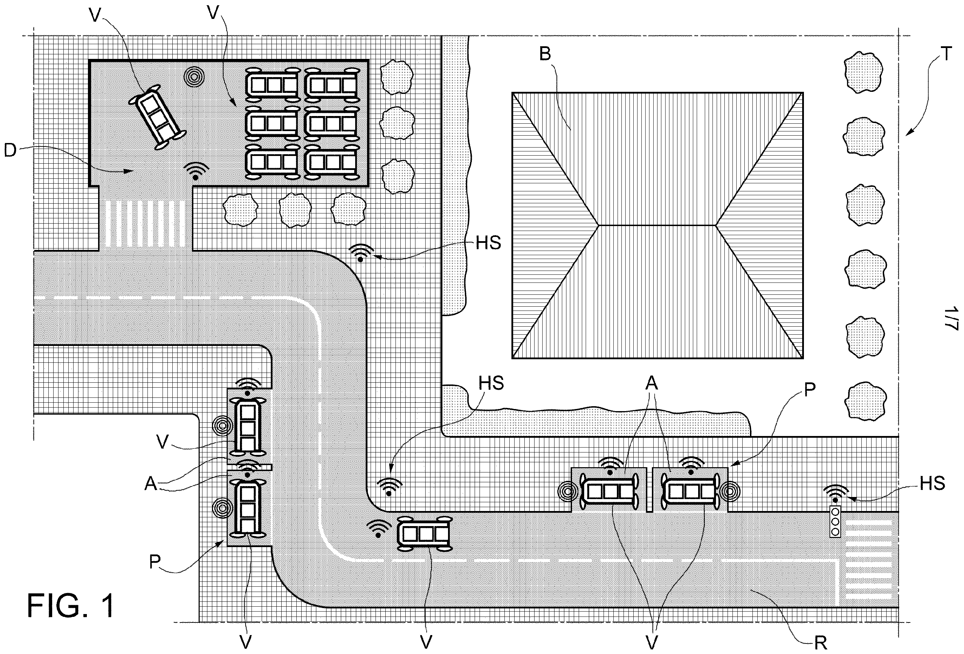

Figure 1 schematically shows an area of urban territory T comprising buildings B and a road network R at which a public and/or road telecommunication infrastructure is constructed which includes, by way of non-limiting example, a plurality of Wi-Fi hot-spots HS.

A fleet of transport vehicles for handling waste collection containers is represented by vehicles V, which are represented, by way of example, at a delivery site D, possibly also acting as a parking station or garage, at respective operating collection sites P and moving on the roadway.

The transport vehicles V are self-driving electric propulsion platforms equipped for example with the following systems:
- an autonomous electronic driving system adapted to drive electronics the vehicle to a planned destination, or a destination calculated in real time according to road condition, weather condition or seasonal condition, e.g. by means of self-learning of the paths by comparison with history data, as will be described in detail below; and
- a motorized storage system of at least one and preferably a plurality of waste collection containers, advantageously of different types, aimed at optimizing the location of containers for access by a user and the vehicle itself, and for transport to and from the waste disposal site.

The fleet of transport vehicles V includes a plurality of vehicles located at a delivery site D or a garage where each transport vehicle is equipped with one or more waste collection containers, previously emptied and sanitized. The aforementioned fleet, according to the needs of specific contexts wherein said waste management mode is implemented, may also include a plurality of vehicles located at parking areas A, with specific containers for collection of waste whose type is suitably indicated, located at the respective collection sites P.

Each transport vehicle is designed to cover a given area of the territory by transporting free collection containers (i.e. empty or discharged) from the delivery site or garage to an assigned collection site P and, vice versa, transporting full collection containers (i.e., loaded) from a collection site P to the delivery site. For example, a transport vehicle V may follow predetermined routes or calculated from time to time on the road network. Of course, without departing from the principles of the invention, the delivery sites D or garage for the fleet of transport vehicles V may be more than one distributed throughout the territory, for example depending on the type of waste to be delivered or the size of the territory to serve.

Advantageously, the collection sites are distributed over the territory area (after a preliminary planning) and sized for the intended use, for example in order to cover in an optimal manner the area of territory in relation to the population and/or productive activities therein.

Advantageously, the aforesaid collection sites are equipped with transceiver systems arranged for the connection via radio with the transport vehicles and for the connection via radio or wired with an electronic system management platform, located near the delivery or garage site or at an organizational centre.

A first embodiment of a transport vehicle V is shown by way of example in figures 2a-2d and with a block diagram in figure 2e.

Each transport vehicle V is designed as an autonomously driven electric shuttle and is equipped with a plurality of sensor devices SENS, including image detection devices such as at least one between cameras operating in the visible and/or infrared, lidar sensors, radar sensors, ultrasonic sensors, and in general proximity sensors adapted to detect the presence and/or proximity of persons or objects (obstacles) along a vehicle trajectory, as well as with ECU processing means of said autonomous electronic driving system, designed to process the images and/or data detected by the sensor devices SENS in a travel condition (or ready to drive) of the vehicle to recognize an environment in the vicinity of the vehicle, and consequently control the vehicle travel or stop acting on the motor(s) MOT according to said images and/or data in order to achieve a completely autonomous driving of the vehicle on the road in compliance with level 5 of the SAE J3016 standard.

In a condition of stop of the vehicle at a collection site, the aforementioned ECU processing means are also arranged to configure an anti-burglary system, processing the images and the data detected by the sensor devices SENS to detect attempts at break-in and/or vandalism and more in general, acts, events and conditions that are not controlled by the autonomous electronic driving system or the electronic management platform and, where appropriate, block the use of the vehicle and/or of the collection containers that equip it according to said images and/or data.

Each transport vehicle V is also equipped with on-board communication means COM for connecting the vehicle in reception and transmission to the communication infrastructures of the city or of the road network in such a way as to implement an operational connection with the electronic management platform, for example to communicate the filling condition of the collection containers and/or for receiving remote commands of the autonomous driving operations, for example remote control commands in real time or navigation instructions for local storage and autonomous implementation by the electronic vehicle driving system.

Each vehicle preferably has four steering and swivel angle wheels W, capable of rotating coherently and simultaneously by 90 degrees with respect to the direction of travel to facilitate manoeuvring operations. In particular, in a travel configuration the wheels are aligned according to a longitudinal direction of translation of the vehicle, longitudinal direction meaning the direction aligned with the longitudinal axis X of the vehicle which, in the representation of the embodiment described herein, coincides with the alignment axis of the waste collection containers, i.e. with the axis oriented along the largest dimension of the vehicle. In a parking movement configuration, the wheels are aligned in a transverse movement direction of the vehicle, transverse direction meaning the direction aligned with the transverse axis Y of the vehicle which, in the representation of the embodiment described herein, coincides with the axis oriented along the smallest dimension of the vehicle.

At least one pair of wheels W and preferably all the wheels of the vehicle W are motorized, that is, they integrate an electric motor MOT.

In the first embodiment, the vehicle has a structure indicated as a whole with reference numeral 10, which includes a lower part 12 housing the autonomous electronic driving system and the batteries necessary for powering the electric motors installed in the vehicle wheels, and an upper part 14 housing the motorized storage system of the containers, comprising a U-shaped frame capable of forming at its interior a seat for the placement of at least one and preferably a plurality of waste collection containers C. The frame has means for supporting the containers, for example in the form of a pair of parallel longitudinal seats G formed on the inner sides of the U-frame, and hydraulic or pneumatic lifting means L of the frame with respect to the lower part 12 of the vehicle structure, for example including a plurality of pistons, designed to carry out the lifting or lowering of the waste collection containers C with respect to the ground. In this way, the vehicle V can lift the containers C from the ground during the travel operations for the transfer to and from a delivery site or a garage, while it can lower the containers by resting them on the ground during a prolonged stop at a collection site, so as not to burden the support frame for a long time and place the containers with the loading mouth at a height accessible to users.

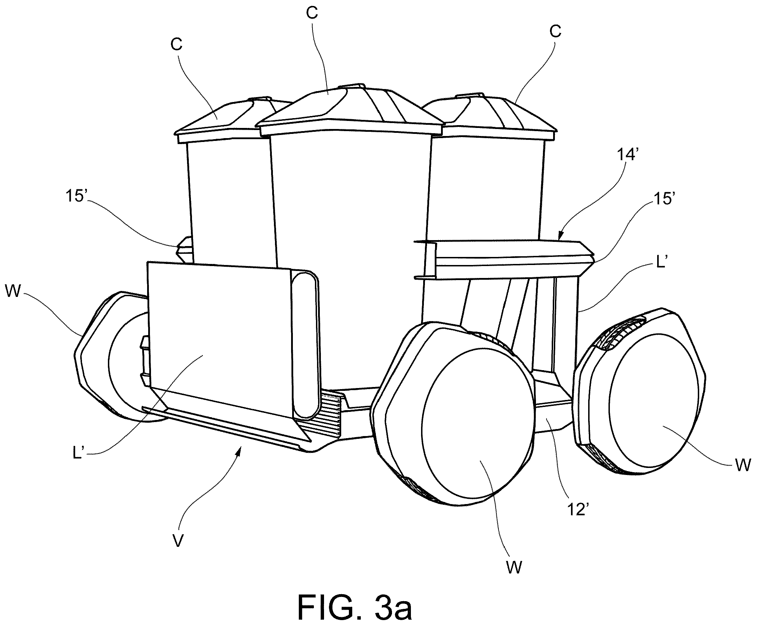

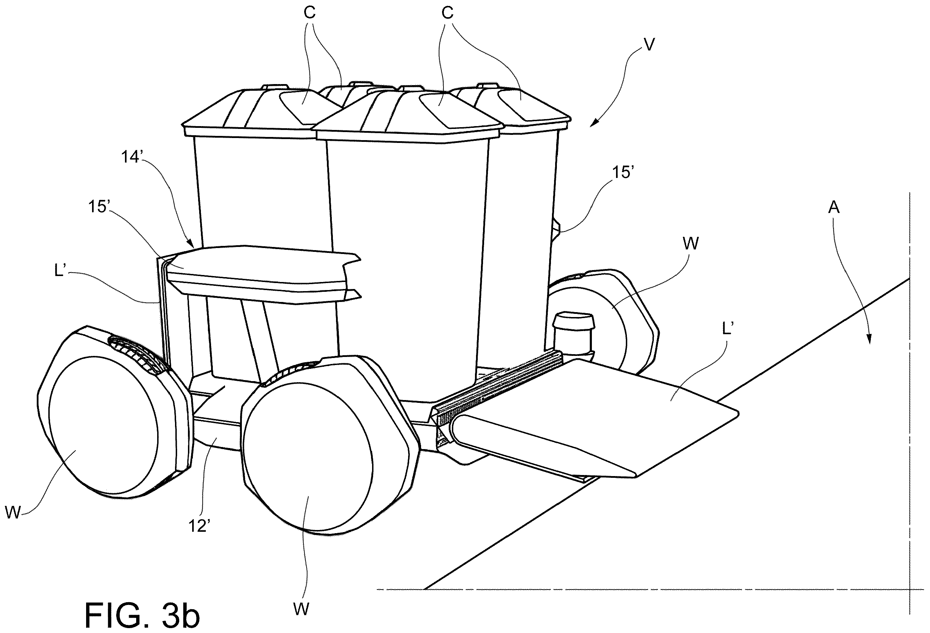

In the second embodiment, shown in figures 3a and 3b, the vehicle V has a structure which includes a lower part 12' housing the autonomous electronic driving system and the batteries necessary for powering the electric motors installed in the vehicle wheels, and an upper part 14' comprising a pair of parallel guides 15' adapted to form therebetween a seat for the placement of at least one and preferably a plurality of waste collection containers C, and adapted to cooperate with a base platform of the vehicle for moving the containers C from and towards a parking area A. The vehicle has means L' for laying down the containers, e.g. including a pair of ramps, which can be actuated in an hydraulic or pneumatic way, designed to carry out the movement of the waste collection containers C towards their parking area. In this way, the vehicle V can deliver or recall the containers C.

The vehicle and/or the collection containers transported thereby are equipped with signalling means 20 for the filling condition of the containers. The vehicle is also advantageously equipped with signalling lights, stop lights and direction indicators, as well as sound alarms, and multi-function perimeter lights.

The upper part 14 of the vehicle may be customized with colours, graphics and/or used as advertising space.

The vehicle, in some parts, may include screens adapted to provide information on the operation of the waste collection system, advertising and other types of messages.

Advantageously, the access ports of the collection containers C have dimensions commensurate with the type of waste to be introduced into the container.

Equally advantageously, the containers have presence or movement sensor means for detecting and signalling the presence (accidental or not) of animals or others, and to send emergency signals to the operating centre and/or stopping movement of the vehicle.

Advantageously, the vehicle and the containers adapted to be transported on the vehicle may also be equipped with face recognition systems and/or graphic interface systems on a personal mobile communication device may be provided, which allow the use thereof only to authorized users and/or which, on the basis of pre-recorded or real time information or on the basis of events occurred in previous waste storage operations in containers, guide users to the correct use of containers for a correct and optimal waste separation. Owing to the communication between the user and the containers/vehicle the real consumption and waste production may be counted for each user registered to the service (which is useful for taxation on wastes calculated based on real waste production, incentives, fines, etc.).

In a delivery site D or in a garage, prior to the assignment of the vehicle to a predetermined collection site, due to its modularity it can be equipped with special containers, for example in the case of vehicle reservation by a user for specific needs through the electronic management platform and a related service reservation application.

In general, the electronic management platform also allows for the planning of waste collection needs, and therefore the frequency of deliveries and the number of vehicles destined for a specific collection site, according to predetermined events or time periods.

The management platform is set up to manage the movement of the fleet of transport vehicles on the road network R in the urban area T for the provision and collection of containers C for the collection of waste assigned to predetermined collection sites. More specifically, the management platform is designed to drive each transport vehicle to a planned destination, such as a pre-established collection site P.

Even more specifically, according to a currently preferred embodiment, the movement of the fleet of transport vehicles is managed according to the location of the collection sites and the loading condition of the collection containers. In particular, the movement of the fleet of transport vehicles is managed through the communication to each transport vehicle of the respective navigation instructions calculated on the platform to drive a transport vehicle to a destination acquired through communication from the platform to the vehicle V, according to the reference coordinates of the collection site P or of the destination delivery site D.

An on-line navigation with continuous communication between the management platform and the transport vehicle during a movement of the transport vehicle is preferably implemented in which, by way of example, the management platform communicates with the transport vehicles V through a telecommunication systems of a known type (for example on a UMTS or LTE network).

Naturally, the management platform may be a distributed management platform, but this solution referred to herein is considered well known in the art and will not be further described herein as it is not relevant for the purposes of implementation and understanding of the present invention.

With the above system, at the set time a self-driving transport vehicle whose containers C are full will leave the respective collection site to the destination site and another replacement self-driving vehicle will arrive at the free destination collection site providing empty waste collection containers C for users.

Advantageously, the planning of the management platform allows intelligently managing a fleet of autonomous vehicles, thus maximizing the efficiency of the routes for the movement of the transport vehicles to and from the collection sites.

Advantageously, it is provided that the transport vehicles move mainly at night or in the hours of low traffic in order to make the operations of emptying and replacing waste collection containers faster and not to congest the city road network.

The swivel wheels W, by rotating by 90 degrees (as shown in figure 2b), allow a transport vehicle V to position itself correctly in the area intended for the collection, e.g. the parking area of a collection site, minimizing the space required for the manoeuvre. In the first embodiment, once the transport vehicle V is parked, a condition that it recognizes, for example, by comparing the current GPS coordinates and the GPS coordinates of a programmed parking area, if the vehicle is equipped with a geographical location system, or through the reception of a consensus signal from a transmitter associated with the parking area, the upper part 14 thereof is lowered, thereby placing the containers C on the ground and the vehicle enters standby mode, thereby reducing the consumption of the supply batteries.

Once filled, the containers automatically close by means of a door applied to the access opening of the single containers, and - in the second embodiment - they send a recovery signal to a transport vehicle, that identifies their current location so that it can be suitably arranged to engage one or more containers. The transport vehicle can also be equipped with a signal light 20 at the top of the container or on one side of the vehicle lights up (for example, red) to signal the temporary unavailability of the container, respectively of all the containers to receive other waste, and - in the second embodiment - the operation of taking the containers back to the delivery site. For example, it is conceivable to adopt a colour code that includes: red colour indications to signal a full container condition, orange colour indications to signal a half-filled container condition, green colour indications to signal an empty container condition. Advantageously, in addition to the colour code, or alternatively to it, the signal lights 20 may be LEDs adapted to represent different graphic forms to allow the use of the system also to colour-blind persons.

It is also possible to equip the system with acoustic systems that emit different sounds depending on the filling status of the single container when a user is approaching.

In the first embodiment, once at least one vehicle collection container is full, which may be determined, for example, by weight sensors associated with a container support module, the transport vehicle automatically reactivates to bring the containers back to the waste disposal site, for example by warning with sound lights and signals the imminent leave of the parking area. At this moment, the upper part 14 of the vehicle is lifted allowing the simultaneous lifting of containers from the ground: a locking mechanism locks the containers to the vehicle, thus avoiding accidental oscillations during the moving path.

The transport vehicle, by virtue of the connection in transmission and reception with the management platform, sends a filling status communication to the aforementioned platform and this in turn transmits to the vehicle a delivery command of the collection containers to the transfer site at a scheduled time.

At the scheduled time, the swivel wheels and the perimeter lights switch to a road configuration and the vehicle enters the road network R to reach the delivery site D geographically closest or assigned to the area. Once the delivery site is reached, the vehicle lowers the upper part 14 and deposits the full containers, releasing them with respect to the frame, allowing an operator to extract them (as in figure 2d), wash and sanitize them and then bring them back to make them available. In a scenario coherent with the second embodiment, delivery of the containers in the delivery site occurs in an automatic and autonomous way without an operator's supervision, through guides 14' and ramp L'. In order to return on the road again, for the subsequent collection cycle, the transport vehicle V will load other containers that are already available and clean.

Conveniently, in the case of vehicles parked in specific parking spaces within enclosed spaces (e.g. shopping centres, parks, companies, large buildings, etc.) in order to ensure continuity of the waste collection service and stable permanence of the containers in the collection areas intended for them, a replacement cycle is automatically arranged: when a vehicle V is about to leave the collection site P assigned to it, a second vehicle V equipped with empty containers receives from the management platform a signal and navigation instructions towards the same collection site P, replacing the previous one.

Advantageously, the use of the vehicle in such enclosed spaces is allowed owing to the fully electric propulsion and the very compact dimensions.

It is also possible to allocate various types of containers according to the needs or amounts of waste collected, varying according to the areas of intervention. For example, by means of sensors the container transport vehicle is capable of gathering information about the type of service offered (for example, the type of waste most produced in the area) and about the traffic conditions in the analyzed period and to communicate such data in real time to the management platform in such a way as to customize the system as much as possible to the final needs.

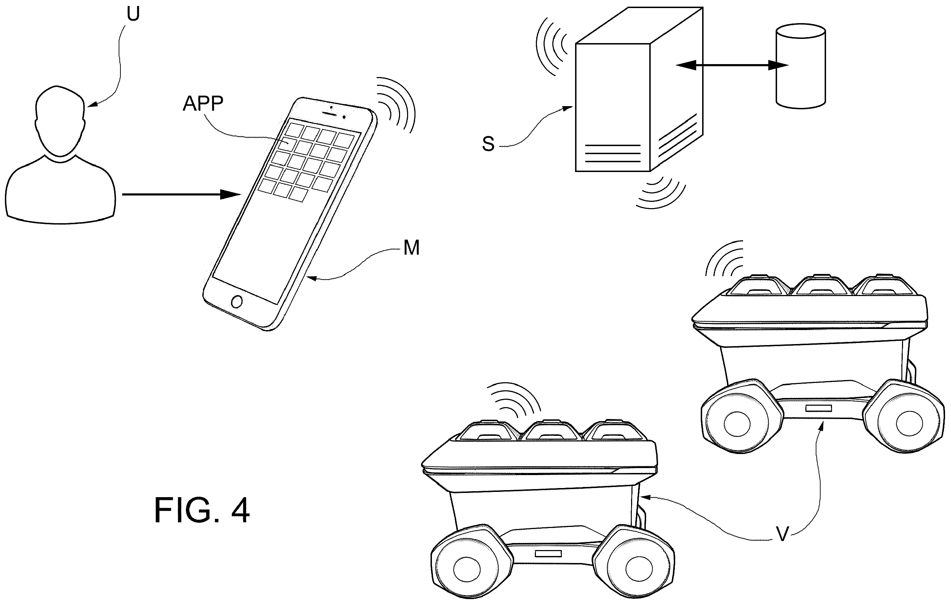

With reference to figure 4, a user is schematically shown, in possession of a personal mobile telecommunication device M on which a software application is resident whose execution generates an IT environment APP adapted to provide the user interface functions (for example, registration and/or access) with the waste collection system object of the present invention. The device M is provided with data input means, such as - by way of example - a touch screen, control keys, image acquisition means, voice recognition means or biometric characteristic recognition means, for example adapted to allow the input of a first data identifying the user's subscriber credentials (the user may also be a user representing a larger number of users, such as in a flat complex), if the service is reserved for subscriber users and adapted to enter at least one of:
- a request for a category of waste collection container and relative number of containers requested;
- a request to collect full containers;
- an indication of the reference coordinates and time for the delivery or collection of the containers.

Basically, through the IT environment APP (the application) it is possible to select and request one or more waste collection containers among those available, in a specific place and at a certain time.

The personal mobile telecommunication device M is adapted to perform a process of locating its current position or to receive a position data on the road map of the territory area T and is arranged to transmit said position data together with a request for delivery/collection of a type of collection container vehicle and any additional information (delivery time, hourly reservation, service identification codes, ...) and receive information communications such as communications of service terms.

In figure 4, it shows a telecommunication connection of a known type (for example on a UMTS or LTE network) between the personal mobile telecommunication device M and an electronic management platform S which basically comprises for example a computerized workstation (workstation) or a server of known type having a processing subsystem, a possible display device and any means of entering data and commands for a human operator, and is connected to or (integrated with) a database comprising a road map of the area of territory T on which the waste collection system object of the invention extends.

The management platform S is designed to process one or more computer programs locally stored or accessible on the network that manage the temporary assignment of waste collection systems to users who request them according to the availability of the selected container and the localization of the users (or of the delivery site of said container that the user indicates).

It should be noted that the proposed embodiment for the present invention in the foregoing discussion has a purely illustrative and non-limiting nature of the present invention. A man skilled in the art can easily implement the present invention in different embodiments which however do not depart from the principles outlined herein and are therefore included within the scope of protection of the invention defined by the appended claims.

## Claims

1. A waste collection system, comprising a plurality of waste collection containers (C), adapted to be operatively arranged at respective predetermined collection sites (P), and at least one remote waste delivery or disposal site (D), **characterized in that** it further comprises:
a fleet of autonomous drive transport vehicles (V), each of which is adapted to carry at least one waste collection container (C), said transport vehicles (V) being arranged for circulation on a network road (R) of a predetermined area (T) according to at least one respective calculated path; and
- an electronic management system (S) for moving the fleet of transport vehicles (V) on said road network (R) for the delivery of at least one predetermined waste collection container (C) in a discharged condition to a predetermined collection site (P) or for the delivery of at least one predetermined waste collection container (C) in a charged condition to a delivery site (D),
wherein said electronic management system (S) is arranged for calculating a delivery path of a transport vehicle (V) on the road network (R) towards a predetermined collection (P) or delivery (D) site and providing navigation instructions to said transport vehicle (V) for the calculated path.

2. A system according to claim 1, wherein each transport vehicle (V) is equipped with:
• on-board communication means, adapted to establish a telecommunication link with said electronic management system (S);
• an autonomous driving electronic system adapted to drive the vehicle (V) to a programmed destination; and
• a motorized storage system of at least one waste collection container (C), adapted to assume a first support configuration of said at least one container for access by a user in a configuration of parked vehicle (V), wherein said at least one container is resting on the ground, and a second support configuration of said at least one container for transporting said container to and from a waste delivery site (D) in a vehicle travel configuration or vehicle parking manoeuvre configuration, wherein said at least one container is raised with respect to the ground.

3. A system according to claim 1 or 2, wherein each transport vehicle (V) has a plurality of pivoting wheels (W), adapted to take at least one driving configuration in which said wheels (W) are aligned in a direction (X) of longitudinal displacement of the vehicle (V) and at least one parking movement configuration in which said wheels (W) are aligned in a direction (Y) of transverse displacement of the vehicle (V).

4. A system according to claim 2 or 3, wherein each transport vehicle (V) is equipped with a plurality of sensor devices, including at least one of image detector devices, lidar sensors, radar sensors, ultrasonic sensors, proximity sensors, adapted to detect obstacles along a vehicle's driving path (V), the autonomous driving electronic system being arranged for processing the images and/or data detected by the sensing devices in a driving or driving preparation condition of the vehicle (V) or in a vehicle (V) parking movement condition to recognize an environment around the vehicle, and to control the movement or stop of the vehicle as a function of said images and/or data.

5. A system according to claim 4, wherein the autonomous driving electronic system is arranged for processing the images and/or data detected by the sensing devices in a vehicle (V) stop condition for recognizing acts, events and conditions not controlled by the autonomous driving electronic system or the electronic management system and blocking the use of the vehicle (V) and/or the at least one collection container (C) that equips it as a function of said images and/or data.

6. A system according to any one of the preceding claims, wherein said autonomous drive transport vehicles (V) are electric propulsion vehicles.

7. A system according to any one of Claims 2 to 6, wherein said navigation instructions provided by the electronic management system to a transport vehicle (V) include real-time remote driving controls or navigation instructions for local storage and autonomous extension by the electronic driving system of the vehicle.

8. A system according to any one of the preceding claims, wherein each transport vehicle (V) is arranged for monitoring the filling state of the collection containers (C) and for communicating said filling state of the containers to said electronic management system and wherein said electronic management system is arranged for receiving from a transport vehicle located at a collection site a status message of filling of said at least one collection container (C) of said vehicle, and for transmitting to the vehicle a delivery command to the delivery site (D) at a programmed time according to said filling state and consequently to calculate a delivery path and provide respective navigation instructions to a replacement transport vehicle towards said collection site.

9. A system according to any one of claims 1 to 7, wherein said electronic management system (S) is arranged for receiving a signal representative of the filling state of the collection containers (C) at a collection site (P), for communicating said filling state to a selected transport vehicle (V) and for calculating a delivery path and provide respective navigation instructions to said transport vehicle (V) towards said collection site (P) for the recovery of said containers (C) and the return of the vehicle to a delivery site (D).

10. A system according to any one of the preceding claims, wherein said electronic management system (S) is arranged for assigning at least one collection container (C) and at least one related transport vehicle (V) to a respective collection site (P) according to the number and type of collection containers (C) intended to said collecting site (P).

11. A system according to any one of the preceding claims, wherein said electronic management system (S) is arranged for programming the rate of delivery and the number of transport vehicles (V) intended for a specific collection site (P), depending on predetermined events or time periods.

12. A system according to any one of the preceding claims, wherein the collection sites (P) are provided with transceiver systems arranged for establishing a radio communication with the transport vehicles (V) and for establishing a radio or wired communication with the electronic management system (S).

13. A system according to any one of the preceding claims, wherein said electronic management system (S) is arranged for temporarily assigning a transport vehicle (V) equipped with at least one collection container (C) to a user (U) requesting a waste collection service, depending on the location of a collection site (P) for the delivery of said container (C).

14. A system as claimed in claim 13, comprising a user-interface computer environment (APP), implemented as an application residing on a user personal mobile telecommunication device (U), arranged for the acquisition of data representative of a location of a collection site for the delivery of at least one waste collecting container (C) and a delivery or withdrawal time of said at least one container, and for communicating said data to said electronic management system (S) of the collecting system by means of a telecommunication network.

15. A system according to claim 14, wherein said location data includes reference coordinates of the current localization of the user personal (U) mobile telecommunication device (M) or geographic coordinates of a collection site (P) belonging to said road network (R).
